# EUROPEAN PATENT SPECIFICATION

(11) **EP 2 293 563 B1**
(45) Date of publication and mention of the grant of the patent: **23.11.2016**
(21) Application number: 10178981.6
(22) Date of filing: 16.10.1997
(51) Int. Cl.: H04N 7/173, H04N 7/088, H04N 5/445, B25J 9/00, H04N 5/00, H04N 7/16

(54) **Access to internet data through a television system**
Internetdatenzugriff über Fernsehsystem
Acces a des donnees internet par le biais d'un systeme de television

(30) Priority: 16.10.1996 US 28138 P; 14.03.1997 US 40763 P; 09.12.1996 US 32136 P; 08.01.1997 US 35029 P; 04.12.1996 US 32571 P; 01.01.1997 US 35236 P
(43) Date of publication of application: 09.03.2011
(62) Divisional of application: 10006661.2
(73) Proprietor: Rovi Guides, Inc., San Carlos, CA 94070 (US)
(72) Inventor: Macrae, Douglas B., Weston, MA 02193 (US); Yuen, Henry C., Redondo Beach, CA 90278 (US); Mankovitz, Roy J., Montecito,CA 93108 (US); Leung, Elsie Y., South Pasadena, CA 91030 (US); Kwoh, Daniel S., Flintridge, CA 91011 (US); Westberg, Thomas E., Sudbury, MA 01776 (US)
(74) Representative: Pisani, Diana Jean

(56) References cited:
- DE-A1- 4 431 438
- DE-A1- 19 502 922
- "VERKNUEPFUNG VON TV MIT INTERNET", FUNKSCHAU,DE,FRANZIS-VERLAG K.G. MUNCHEN, vol. 68, no. 18, 16 August 1996 (1996-08-16), pages 70-71, XP000631189, ISSN: 0016-2841
- BACH U ET AL: "MULTIMEDIA-TERMINAL ALS ENDGERAET", FUNKSCHAU,DE,FRANZIS-VERLAG K.G. MUNCHEN, vol. 68, no. 6, 1 March 1996 (1996-03-01), pages 70-75, XP000556486, ISSN: 0016-2841
- HIRTZ G ET AL: "OPEN TV: BETRIEBSSYSTEM FUER INTERAKTIVES FERNSEHEN", FERNSEH UND KINOTECHNIK,DE,VDE VERLAG GMBH. BERLIN, vol. 50, no. 3, 1 March 1996 (1996-03-01), pages 84-89, XP000581417, ISSN: 0015-0142
- BACH U ET AL: "MULTIMEDIALES TV-GEREAT", RADIO FERNSEHEN ELEKTRONIK,DE,VEB VERLAG TECHNIK. BERLIN, vol. 45, no. 9, 1 August 1996 (1996-08-01) , pages 28,30-31, XP000636538, ISSN: 1436-1574

## Description

### BACKGROUND

The invention relates to interactive television systems capable of two-way communication with networked computer systems operating as information service providers, in particular Internet service providers.

The Internet may be viewed as a large group of networked computer systems, each of which has a distinct alphanumeric address. A user terminal which seeks to receive data from one of the networked computer systems will send a command to the desired Internet address through the network to that system requesting that a particular set of data be sent to the terminal. The user terminals arc connected to the network through the established telephone system in the user's community. An Internet address may be limited to the identity of the particular networked computer system, or may include additional information which directs the networked computer system to send a particular set of Internet data. The additional information may include a subdirectory, a file name, or both, which instructs the networked computer system which portion of data is desired by the requesting terminal. The system will thereafter send the requested data through the network to the terminal. Further exchanges of data may or may not take place between the terminal and the networked computer system, depending upon the desires of the terminal user.

The World Wide Web (WWW/Internet) is an Internet network designed for popular use. Apparatus sold under the trademark "WebTV," provided by Philips-Magnavox and Sony, allow television viewers to access the World Wide Web through their televisions.

It is therefore desirable to enhance television viewing and Internet browsing by providing a more intimate interface between the viewer's television and the Internet access apparatus so that both television viewing and Internet browsing may be performed simultaneously, and preferably interactively such that the Internet data relates to the television program being viewed.

### SUMMARY OF THE INVENTION

The invention is defined by the appended claims to which reference is now directed.

According to one embodiment of the invention, an interactive entertainment network system is provided which includes a number of user interface units in individual homes, each having a tuner, a display device and a modem or other data interface device for communicating with a data service provider. A television signal provider supplies a plurality of television signals to the tuner of each user interface unit, wherein at least one of the television signals has embedded data including a particular data address site. Information representing the particular data address site is displayed simultaneously with the television program on the display device, e.g., either as a graphical icon or text. A data service provider in two-way connection with the modem of each user interface site retrieves and transmits data corresponding to a data address site requested by an individual user interface unit for display on the display device of that user.

According to another embodiment of the invention, a display controller for coupling to a display device and to a data retrieval terminal in two-way communication with a data service provider is provided. The display controller includes a tuner for receiving a television signal containing a television program and at least one embedded data unit including a data address site, means for extracting the at least one embedded data unit from the television signal, a memory for storing the at least one data unit, and a video display generator. The display controller also includes a microcontroller coupled to the tuner and the extracting means and the memory for storing the at least one data unit in the memory, controlling the video display generator to display the data site address on the display device simultaneously with the television program, selectively retrieving the data site address from the memory in response to a user request, controlling the data retrieval terminal to request data corresponding to the user selected data address site from the data service provider, and controlling the video display generator to format and display the requested data received from the data service provider on the display device.

According to yet another embodiment of the invention, a method is provided for enhancing viewing of a television program with interactive information retrieval. The method includes the steps of, at a television signal provider, embedding at least one data unit comprising a data site address into a television signal containing a television program. Then, at a user site, receiving the television signal, extracting the data unit from the television signal, displaying information representative of the data address site simultaneously with the television program on a display device, and then storing the data address site in a memory. Once the user selects the information representative of the data address site, a connection is established with a data service provider having access to data corresponding to the selected data address site, the data corresponding to the data address site is requested and transmitted from the data service provider to the user site. The retrieved data is then formatted and displayed on the display device at the user site. Preferably, several data address sites are stored in the memory simultaneously and, at the user's request, displayed in a menu from which the user can select a particular address site.

### BRIEF DESCRIPTION OF THE DRAWINGS

The attached figures demonstrate alternative embodiments of a system designed in accordance with the present invention in which
FIG. 1 is a block diagram schematic demonstrating a system according to one embodiment of the present invention;
FIG. 2 is a display including an exemplary graphical icon identifying that a data address site is available with the displayed television program;
FIG. 3 is a display of an Internet mode according to another embodiment which includes several data address sites;
FIG. 4 is a display of the Internet mode according to the embodiment of FIG. 3 displaying data corresponding to a selected data address site;
FIG. 5 is a plan view of a remote controller for use with an embodiment of the invention;
FIG. 6 is a display of the Internet mode according to yet another embodiment displaying data corresponding to a selected data address site;
FIG. 7 is a block diagram schematic demonstrating a system according to a further embodiment of the present invention;
FIG. 8 is a table including exemplary icons representative of various types of data address sites; and
FIG. 9 is a block diagram schematic demonstrating a system according to yet another embodiment of the present invention.

### DETAILED DESCRIPTION

According to a preferred embodiment of the invention, television programs are linked to data and/or graphics at Internet sites to expand the on screen information available to a television viewer.

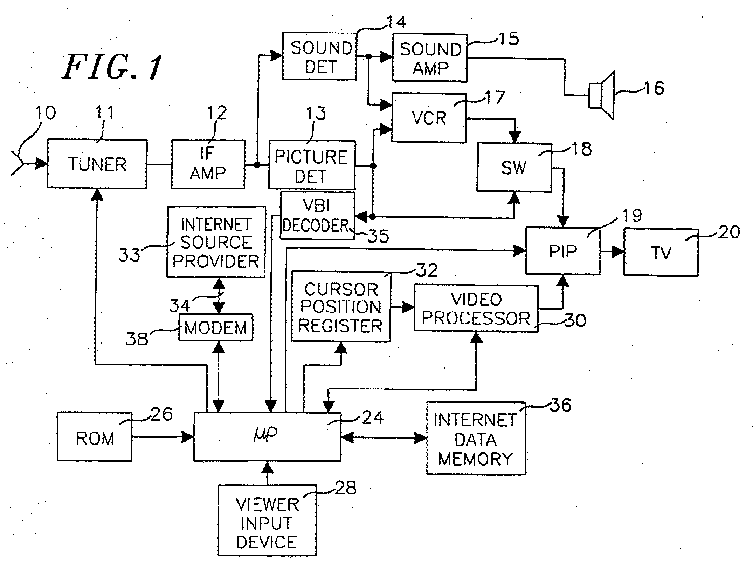

FIGS. 1-4 illustrate a specific embodiment of the invention. In FIG. 1, the reference numerals refer to the same elements described in application Serial No. 08/475,395 filed on June 6,1995, the disclosure of which is incorporated fully herein by reference.

With reference to FIG. 1, a source of television signals 10 such as a terrestrial antenna, or a cable is connected to a television tuner 11. The output of tuner 11 is a modulated intermediate frequency signal containing video and audio television information. Tuner 11 is connected by an intermediate frequency amplifier (IF AMP) 12 to a picture detector (PICTURE DET) 13 and a sound detector (SOUND DET) 14, which produce base band video and audio signals, respectively. The audio signal is coupled by a sound amplifier (SOUND AMP) 15 to a loudspeaker 16. The video signal is coupled by a video amplifier not shown to one input of a switch 18. Sound detector 14 and picture detector 13 are connected to the audio and video inputs, respectively, of a video cassette recorder (VCR) 17. (Alternatively, television signal source 10 could be directly connected to the RF input of VCR 17, if its internal tuner and demodulating circuitry is to be utilized.) The output of VCR 17 is connected to the other input of switch 18. The output of switch 18 is connected to one input of a conventional picture-in-picture (PIP) integrated circuit chip 19. The output of PIP chip 19 is connected to the video input of a television receiver or monitor (TV) 20 having a screen (not shown).

Internet data, including Internet site addresses, is stored in Internet data memory 36. Internet data memory 36 is connected to a microprocessor 24 that is programmed to control the operation of the described equipment (Internet data memory 36 could be part of the RAM of microprocessor 24). An operating program for microprocessor 24 is stored in a read only memory (ROM) 26. A viewer input device 28, preferably in the form of a remote IR controller, is coupled to microprocessor 24 to provide commands from the viewer. A video processor 30 is coupled to microprocessor 24. When the viewer wishes to see Internet site addresses, microprocessor 24 recalls a portion of the Internet data from memory 36 and couples it to video processor 30, where the Internet site addresses are formatted for display. Preferably, the information stored in video processor 30 is a bit map of what is displayed on the screen of television receiver 20. Video processor 30 is connected to the other input of PIP chip 19. Preferably, viewer input device 28 controls microprocessor 24 by cursor movement on the screen of television receiver 20. To this end, microprocessor 24 and video processor 30 are coupled to a cursor position register 32. (Alternatively, the viewer can select items of information displayed on the screen by keying into viewer input device 28 code numbers assigned to these items.) Microprocessor 24 is also coupled to tuner 11 for channel change, to VCR 17 for play/record selection and start/stop, to switch 18 for selection of one of its inputs, and to PIP chip 19 for selection of the mode of PIP operation.

According to one embodiment, an Internet service provider (ISP) 33 is connected to microprocessor 24 by a transmission link 34 such as a telephone network or a television cable. An interface device such as a telephone or cable modem 38, or digital interface device (not shown) for a fiber optic connection, couples transmission link 34 to microprocessor 24 if necessary. ISP 33 is connected to an Internet backbone in well known fashion to access data at any site on the World Wide Web, or preferably the Internet generally.

To enable a television viewer to access data about a television program that the viewer is watching, Internet data is embedded in the vertical blanking interval (VBI of the television signal carrying the program. According to one embodiment, the Internet data includes the names and Internet addresses of a pluralityof Internet sites. When the television signal carrying the program being watched is captured by tuner 11, the Internet data embedded in its VBI is stripped out by a VBI decoder 35 coupled to microprocessor 24. Microprocessor 24 then stores the data in Internet data memory 36. The memory addresses of the Internet names are linked to the Internet addresses in memory 36.

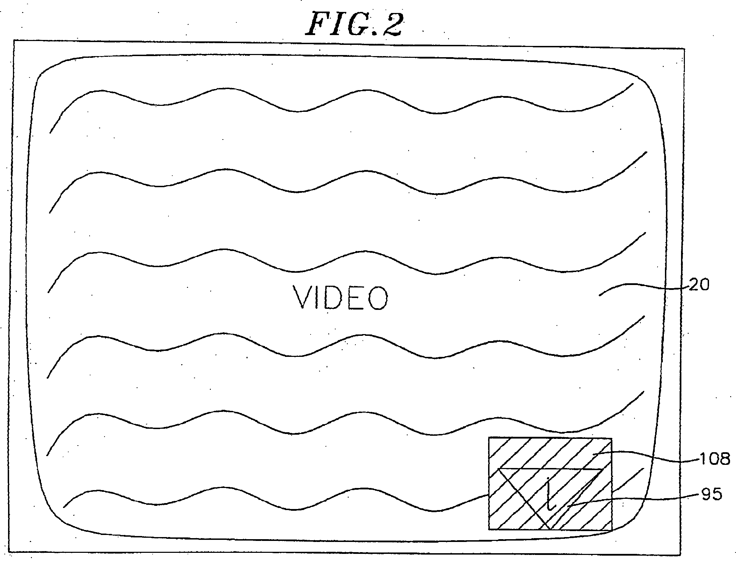

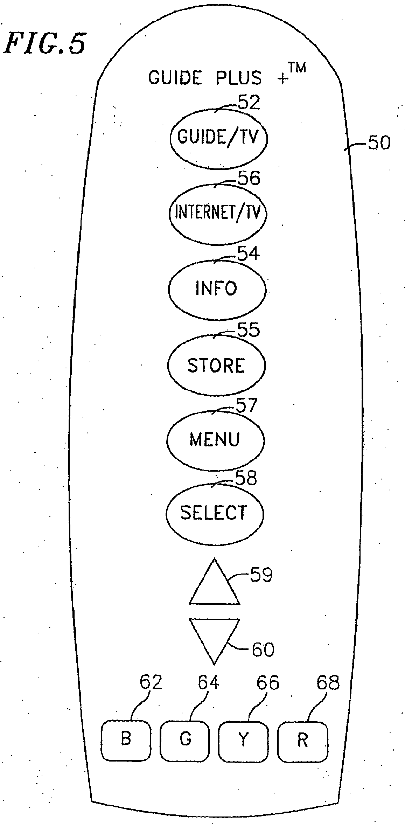

As shown in FIG. 2, a graphical icon 95 appears on the screen of television 20 when the television program is displayed full screen, i.e., in a television mode, to inform the viewer that Internet data accompanies the television signal and is stored in memory 36. Icon 95 can appear for a limited time period after the television program is first displayed or for the entire time period of the program. If the viewer wishes to access an Internet site in connection with the television program, the viewer presses mode button 56 on a remote controller 50, shown in FIG. 5, which introduces an Internet mode of operation described below. Microprocessor 24 is programmed to carry out this operation. By repeatedly pressing mode button 56, the viewer can toggle back and forth between the television mode and the Internet mode.

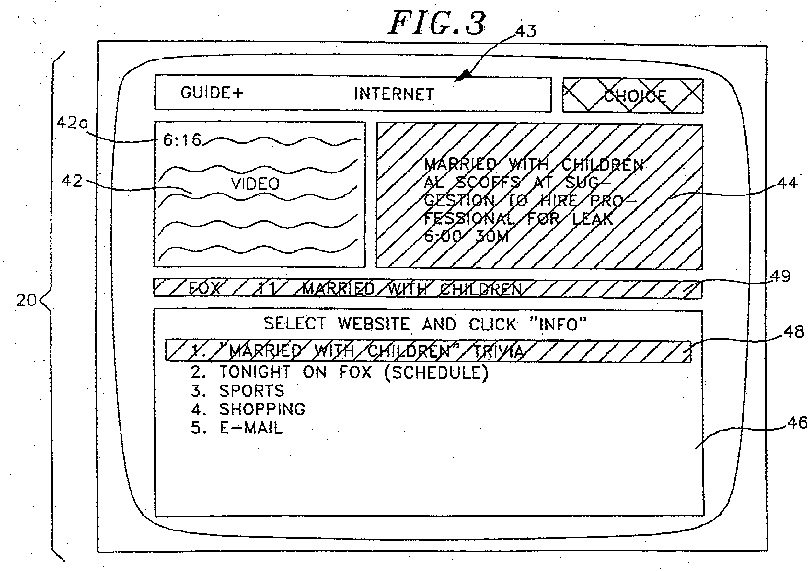

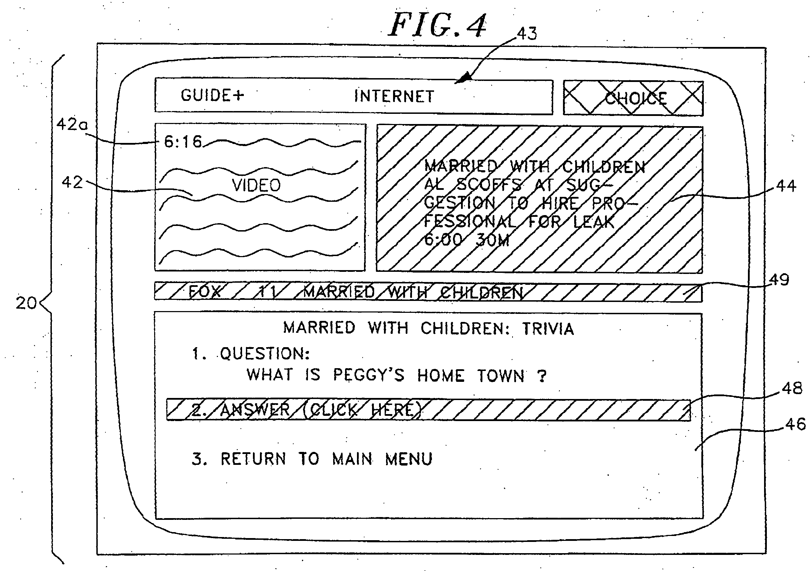

In one embodiment, the Internet site information is placed in a picture-in-picture ("PIP") window on the television screen such that the Internet site information may be viewed simultaneously with the television program. Conversely, the television signal may be placed in a PIP window on the television screen as shown in FIGS. 3 and 4. In this embodiment, the Internet site information occupies the majority of the television screen, and the television program is displayed in a PIP window. In this manner, the television video signal may be viewed simultaneously with the Internet information, and thus supplement the information provided to the viewer.

As shown in FIG. 3, the video portion of the television program last viewed in the television mode is displayed in area 42 and the audio portion is reproduced by the speaker systems of the television set. As an option, a textual description of the program is displayed in an area 44 and information about the television programs, i.e., program title, station name, and channel number are displayed in a banner 49 underneath areas 42 and 44. A message is displayed at the top of an area 46 to prompt the viewer to select from a number of Internet site names displayed in area 46 by moving a cursor 48 with arrow keys 58 and 60 (see FIG. 5). For example, the Internet site names may be related to the particular program ("1. 'MARRIED WITH CHILDREN' TRIVIA"), the particular broadcaster ("2. TONIGHT ON FOX (SCHEDULE)"), general services offered by the system provider ("3. SPORTS"; "4. SHOPPING"), or directed to the particular user's Internet account ("5. E-MAIL").

After an Internet site name is selected, the viewer presses INFO button 54 on controller 50. As a result, the Internet site address to which the selected Internet site name is linked is retrieved from memory 36 by microprocessor 24 and sent through the telephone or cable interface to ISP 33. Once the microprocessor 24 has been directed to initiate data acquisition, it will instruct the modem 25 to connect to an Internet service provider (ISP). After establishing a connection to the ISP, the microprocessor 24 initiates a data request from the Internet site address which was received along with the graphical icon transmitted in the data unit. The microprocessor 24 thereafter receives the requested Internet data, and stores it in RAM. The requested Internet data may include graphics, text, or a combination of both. After receiving the Internet data, the microprocessor may or may not terminate the modem connection to the ISP, depending upon the design of the embodiment, or the configuration options set by the viewer. (If desired, this function of microprocessor 24 could be carried out by commercial equipment sold under the trademark "WebTV," provided by Philips/Magnavox and Sony.)

The information at the addressed Internet site is downloaded from ISP 33 over transmission link 34 to microprocessor 24 and then displayed on the screen simultaneously with the television program to which the information relates, as illustrated in FIG. 4, after being composed by video processor 30. As illustrated in FIG. 4, the name of the Internet site can be displayed above the text of the information from the Internet site. If the television program is a television series such as "Married With Children," the displayed information could be an Internet "page" trivia about the show (FIG. 4), merchandising and home shopping information, or a link to a fan e-mail site. The viewer then navigates about the Internet site in the manner dictated by the viewer's software to find the desired information.

Only an initial portion of the Internet data is displayed, as the amount of Internet data received will likely exceed the amount conveniently displayable at one time. The viewer may "scroll" through the remainder of the Internet data or "page," at his or her discretion, in one embodiment by utilizing arrow keys on a remote control. The user interface of the page viewing may be accomplished in a conventional manner, e.g., in the manner of a typical PC-based web browser, or the user interface associated with WebTV, provided by Philips-Magnavox, or Sony.

If desired, the display of FIG. 3 could be eliminated. In other words, only one Internet site address would be embedded in the VBI of the television signal and the viewer would not make an Internet site selection. In this case, inclusion of the Internet site name is optional, because the viewer does not have a choice of Internet sites. When the viewer wishes to access Internet information about a program marked with an icon, the viewer presses button 56, the VBI Internet site address is sent through the telephone or cable interface to ISP 33, and the display of FIG. 4 appears directly on the screen with the VBI Internet site name. Preferably, the television program is displayed full screen until the data retrieved from the ISP 33 is available for display, i.e., after establishing a connection with the ISP 33, requesting the data, etc. Preferably, the graphical icon 95 ceases to be displayed once the viewer selects the Internet data.

In a typical Internet "web page," there are "links" to other Internet addresses, which provide alternative or complementary data to that found in the originally displayed web page. In a preferred embodiment of the invention, a user may select one of these links with a remote control, utilizing arrow keys 58, and/or on-screen cursor 48. For example, in FIG. 4, the answer to the trivia question is contained in a linked web page the viewer can select to confirm his or her response. These links are commonly referred to as "hypertext" links. If a link is selected, the microprocessor transmits the desired address to the ISP, and thereafter receives and displays the newly-received Internet data in the manner described above. Thus, if it is desirable to allow the viewer to link to additional Internet site addresses, the microprocessor should maintain the modem connection to the ISP 33 until directed by the user to terminate the connection. In this manner, the repeated request and receipt of successive pages will not necessitate delays associated with initiating a connection to the ISP 33.

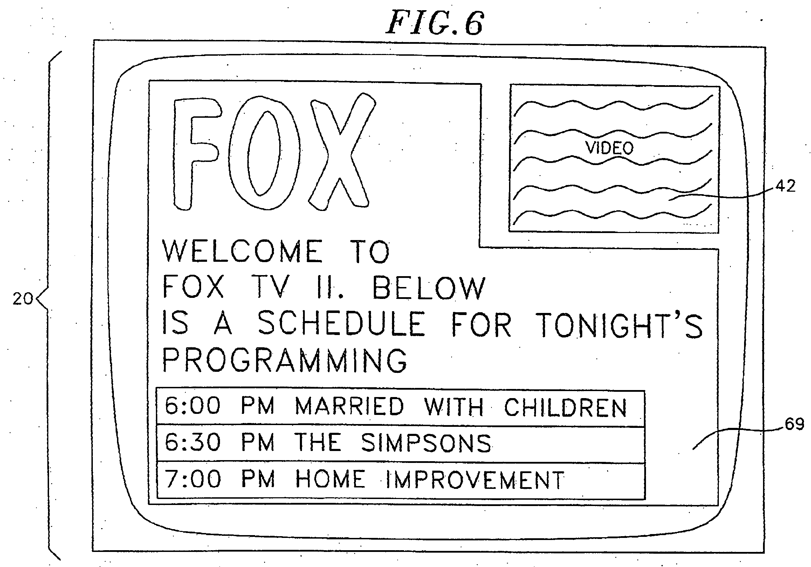

In order to accommodate the simultaneous viewing of both the Internet site Internet information and the television signal, particularized display formats may be used. In a further embodiment, the information for the Internet site is formatted to fit around the PIP window in which the television program is displayed, as shown in FIG. 6. Typical Internet data received over the World Wide Web is transmitted in HyperText Markup Language ("HTML"). A typical HTML file includes text, graphics, and instructions for formatting the text and graphics on a screen, along with other embedded commands. A computer or other terminal displaying an HTML file will format the file for display on the screen, based in part upon the embedded instructions for formatting the text and graphics, and based in part upon the requirements for aesthetic and efficient display of the information on the particular viewing device.

When displaying two video signals simultaneously using the PIP format, typically one video signal occupies the majority of the viewing screen, while the second video signal is displayed in or near to one corner of the television screen and typically occupies one quarter of the screen or less. With this type of display format, the second video signal obscures a not insubstantial portion of the first video signal. This can result in an inefficient and undesirable display of information to the viewer when PIP is used in connection with the present invention.

Hence one aspect of the present invention includes a microprocessor adapted to format the HTML file received over the Internet in such a manner as to accommodate the television program signal in one portion of the television screen. In this manner, the television program signal may be viewed simultaneously with the Internet HTML information, without obscuring any of the Internet HTML information by the television program signal. For example, if it is desired to place the television program signal in a PIP window in the top right hand corner of the television screen, the HTML file should be reformatted by the WebTV terminal (or other Internet display device associated with the system) to display information only in the remainder of the screen, such that it will not be obscured by the overlaid television program signal. In this instance, the HTML file would be reformatted into the "L" shaped display 69 of FIG. 6, so that the right hand corner of the Internet video signal contains no information to be obscured by the television program signal.

It should be noted that the user interface of this embodiment is designed so the television remote controller 50 can also be used to navigate the website, in addition to operating the television and guide functions.

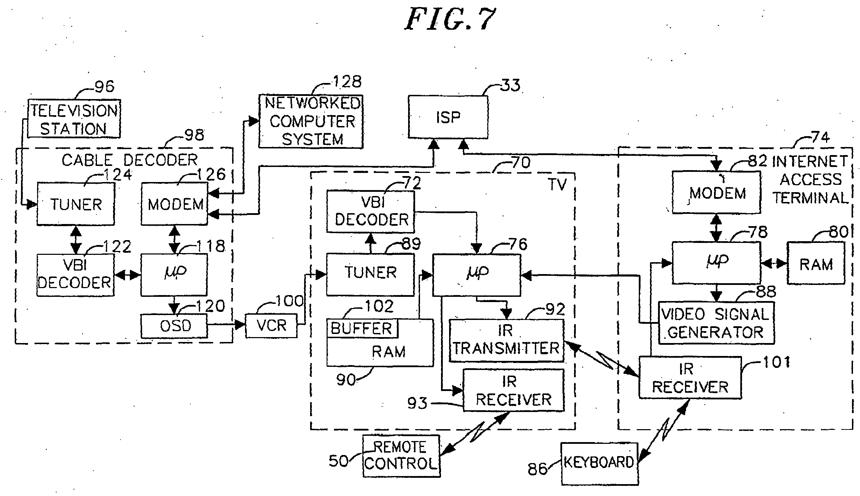

According to another embodiment of the invention, shown in FIG. 7, a conventional television 70 is provided with a Vertical Blanking Interval (VBI) decoder 72 and a separate Internet access type terminal 74 connected to the Internet, for example apparatus sold under the trademark "WebTV". A microprocessor 76 that controls the operation of the television 70 is programmed to perform the functions described below.

The Internet access terminal 74 includes a microprocessor 78, a Random Access Memory 80 (RAM), a modem 82, a user input device such as a remote control 50 or a keyboard 86, and a video signal generator 88. In typical operation, the microprocessor 78 of the Internet access terminal 74 will receive user input regarding particular data to be received over the Internet; utilizing the modem 82, the microprocessor will receive the desired data (typically a "web page" consisting of formatted text and/or graphic images) and output a video signal suitable for displaying the desired data on the screen of an attached television monitor.

Television 70 has a tuner 89 and RAM 90 coupled to Internet access terminal 74. The Internet access terminal 74 sends a video signal to the television set. The microprocessor 76 is provided with an infrared transmitter 92 to send commands to the Internet access terminal 74. Additionally, keyboard 86 or remote controller 50 is configured to send infrared commands to either the Internet access terminal 74 via IR receiver 101 or to the television 70 via IR receiver 93.

The Internet access terminal 74 is coupled via a standard telephone line to ISP 33, which functions in the displayed embodiment as an ISP. The server is configured to send and receive data over the World Wide Web (WWW/Intemet) to and from computer systems networked thereto.

In a preferred embodiment of the present invention corresponding to the system shown in FIG. 7, data representative of on-screen graphical icon, along with an associated Internet site address, is transmitted as a single data unit, packet, or group of packets in the VBI of a television signal. The VBI has been demonstrated over the past two decades to be a suitable vehicle for the transmission of digital data along with a television signal. In particular, the VBI is well-adapted for the transmission of relatively small packets of data. The graphical icon 95 is displayed on-screen with the associated television signal as described above in reference to FIG.2.

A television signal incorporating the above mentioned data unit is sent by a television station 96, and is carried by a cable provider. In alternative embodiments, the television signal may be sent by conventional broadcast, or by satellite. When the television signal is carried by cable, the user's home is typically equipped with a cable decoder 98, which extracts the tuned video signal, which is the television signal combined with the data unit in the VBI. The cable decoder 98 is capable of being controlled by the microprocessor by infrared transmitter (not shown in the drawings). The video signal is thereafter delivered to a VCR 100, which also is capable of being controlled by the microprocessor by infrared transmitter (not shown in the drawings). Both the video signal and the data in the VBI of the video signal are delivered to the television 70. VBI decoder 72 for separating the data in the VBI from the video signal, and for delivering that data to the microprocessor.

Data units may be transmitted in the VBI of all channels serving a particular broadcast region, or they may be included by program creators (producers, advertisers, etc) in the VBI of the videotape provided to a broadcaster. In this manner, when the program is replayed for broadcast by a broadcaster, the data unit containing the Internet site address and other information is present in the broadcast and may be received by any apparatus viewing the program.

The information at the Internet site corresponding to the transmitted Internet site address is preferably related to the content of the program currently being telecast in the television signal, which contains the data unit transmitted in the VBL Preferably, a descriptive title for the Internet site address that will enable the viewer to distinguish the Internet site from other Internet sites is also included in the data unit. When the data unit transmitted in the VBI is received at a television receiver with the program, it is stored in a temporary buffer portion 102 of the RAM 90. Preferably, the storage capacity of the temporary buffer is one data unit, so that each new data unit overwrites and replaces the previously received data unit. Alternatively, each successively received data unit is placed on the top of a stack in RAM, so that previously received data units will still be accessible to the microprocessor if desired by the viewer.

The extracted data includes data representative of an on-screen graphical icon and an Internet site address, as referred to above in reference to FIG. 2. The microprocessor superimposes the graphical icon 95 on a portion of the displayed video signal, thus indicating to the user that additional information concerning the television program is available through the Internet. The graphical icon will preferably be placed in an unobtrusive portion of the television signal, e.g. such that it is displayed on a corner of the television monitor as shown in FIG. 2.

The viewer is thereby alerted to the presence of additional information concerning the displayed television program. At the viewer's initiation, the microprocessor may begin the process of acquiring the desired additional information over the Internet. The viewer initiates the process of data acquisition by pressing SELECT button 58 on remote controller 50 (see FIG. 5) or other viewer input device. Alternatively, the viewer initiates the process by pointing a cursor 108, with a mouse or other pointing device (not shown), to the location of the on-screen icon 95, as shown on the exemplary full screen display of FIG. 2. Alternatively, the viewer may direct the microprocessor to store the Internet site address and descriptive title in the manner referred to above for later use responsive to an on-screen selection process.

The graphical icon 95 is overlaid on the screen as soon as it is received and is thus displayed simultaneously with the program. If the viewer wishes to receive more information about the displayed program, e.g., more details about a commercial, additional details concerning a news story, or statistics about a sporting event, the viewer presses a STORE button 55 on remote controller 50 (see FIG. 5) to transfer the Internet site address and the corresponding descriptive title, e.g., "Today's NFL Game Scores" to a directory portion of the RAM and to extinguish the icon on the screen. Any number of Internet site addresses can be stored in the directory in this manner as the television viewing session progresses.

Alternatively, the viewer may press a button 54 on the remote control, designated by "INFO," or some other informative designation, to access a menu of options. One option is to store the Internet site address and associated descriptive title. Another option may be to immediately access the Internet and obtain the additional information. Other options consistent with the disclosure of the present invention may be present on the menu presented to the viewer.

According to yet another embodiment corresponding to the system shown in FIG. 7, the directory is managed as a web browser bookmark memory. The website addresses and titles are stored in the directory until they are deleted or replaced by new addresses and titles on a first-in-first-out basis when the directory is full. Alternatively, the newly received website addresses replace old addresses and titles on a next-in, least-used basis, i.e., when a new website address and title is received, it is stored in memory in place of either the most infrequently accessed website address/title in the bookmark memory, or in place of the least-reccntly accessed website address/title. Preferably, the microprocessor is programmed to permit the individual user to select which mode of memory management to utilize.

When the viewer wishes to establish a connection to the Internet site of one of the stored addresses, the viewer presses a MENU button 57 to display the Internet site titles, and optionally the corresponding Internet site addresses, stored in the directory. The viewer selects the desired title with on screen cursor 108 and then presses a SELECT button 58. As a result, the microprocessor transfers the corresponding Internet site address to the Internet access terminal 74, the Internet site is connected to the Internet access terminal 74 and information from the Internet site is displayed on the screen instead of the television program.

In yet another embodiment corresponding to the system shown in FIG. 7, the present invention is incorporated into a cable decoder 98. In a standard cable decoder, there are present a microprocessor 118, an on-screen display facility 120, a VBI decoder 122 (in addressable decoders), and a tuner I24. Thus, the present invention may be implemented in a cable decoder environment with the addition of a modem 126 for data connection to an ISP, and sufficient RAM for the receipt and display of the Internet "web page." As bidirectional transmission by cable becomes available, the telephone modem 126 can be eliminated and the cable system, in conjunction with suitable hardware, can be used to connect the user terminal to the Internet or other data provider.

In a further embodiment, rather than receiving the desired additional information over the Internet, a dedicated computer system 128 could be utilized. In a system of this nature, the dedicated system would serve as a clearinghouse or dedicated database for the storage of the related information. When a broadcaster desired to provide additional information, it transfers the additional information and a unique identifying code to the centralized database utilizing conventional techniques. Additionally, the Information may be transmitted to the centralized database on a television or cable signal. Finally, the additional information may be supplied to the user in the form of a CD-ROM or other large scale portable memory device. Thereafter, when a user desired additional information, the microprocessor would initiate a connection to the dedicated system to receive and display the additional information in the manner described above. Such a dedicated system could be integrated with the Internet so that some information could be supplied to the user by Internet and some information could be supplied by the dedicated system. The dedicated system could be the user's own personal computer system so that the data site addresses received over the VBI correspond to data previously stored, by one of the above-described methods, in the user's personal computer, e.g., in a CD-ROM or transferred by modem.

In another embodiment of the present invention, Internet data at an Internet site may also be linked to particular television programs to expand the information available to an Internet browser. Specifically, Internet text or graphics at an Internet site is marked with an icon or designated as hypertext to represent that a related television program is scheduled for telecast. If desired, different icons could be used to distinguish between currently telecast programs and programs to be telecast in the future. The icons are linked to data at the Internet site representing channel, day, time, and length (i.e., CDTL) or the related television programs. This aspect of the invention is particularly convenient for a television aficionado who is reading Television Guide-like articles on line to click on hypertext in the article to set up a television program for viewing or recording. If the Internet user wishes to watch or record a television program, the user clicks on the icon with a mouse, e.g., one click to watch and two clicks to record, and the CDTL data is transmitted by the Internet connection to the WebTV terminal at the user's location. The WebTV terminal couples the CDTL data to the microprocessor. If the CDTL data identifies a currently telecast program, the microprocessor operates the television receiver or the VCR, depending upon whether one click or two clicks were entered, and sets the appropriate tuner to the designated channel. If the CDTL data identifies a future program, the microprocessor stores the CDTL data in the recording/play stack for use in recording or play at the designated time.

The embodiment depicted in FIG. 7 is therefore capable of performing the functions described above in accordance with the present invention. In addition, the ISP is capable of providing data to be incorporated into the VBI of the transmitted television signal which notifies a particular user that he or she has received electronic mail. Thus, when viewing television, the viewer may be informed by an on-screen icon 130 that he or she has received electronic mail, and the viewer may thereafter direct the microprocessor to control the Internet access terminal 74 to obtain and display the electronic mail message or messages. When this function is implemented, the VBI includes an identification code or address that uniquely designates a particular viewer's apparatus, so that only the designated apparatus at the site where the electronic mail message is received actually displays the electronic mail icon. The electronic mail data units with identification codes are routed to the respective broadcast regions where the recipients are located. The data to be broadcast to a particular region may be provided to a network affiliate in that region to be inserted into the VBI before broadcast.

The data unit transmitted to a particular user to inform him or her that he has received electronic mail may also include the subject or sender of the mail message. In this manner, the viewer may view the subject or sender of the mail message on the television screen without connecting to an ISP to receive the entire mail message. The viewer may therefore "screen" his or her E-mail, and connect only when the mail message is of interest or importance to him or her. Data units indicating the presence of electronic mail, or other uniquely addressed data units may be transmitted on all channels of a particular broadcast region, or may be provided on a single channel to which the tuner tunes when the television is not in use. When not in use, the microprocessor may therefore monitor the VBI of this single channel and obtain any directly addressed data units. Alternatively, an apparatus may be equipped with two tuners, one of which is constantly tuned to the channel containing the VBI data, and one of which is used to tune to television signals for display.

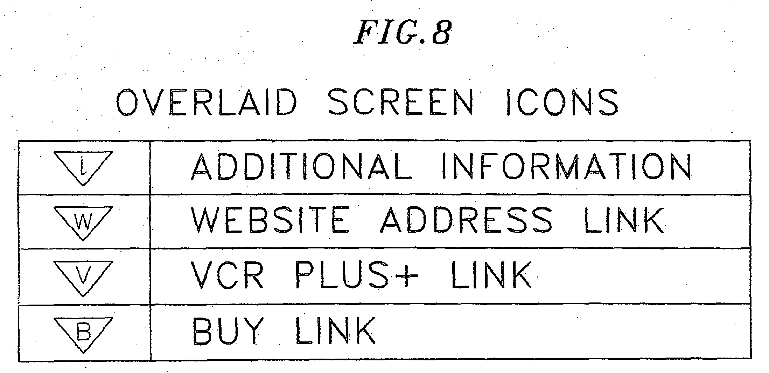

As shown in FIG. 8 potential on-screen icons include an icon 132 representative of the availability of additional information in a video program. For example, an extended advertisement, or how-to show, or local information program may be available at another time or on another channel. By pressing an appropriate button on the remote control, the microprocessor may be directed to record that show. Data in the data unit representative of CDTL may be placed into a location in the RAM, such that the VCR is set to record the program at the time of its airing. In addition, a data unit may be transmitted and directed to a particular user's apparatus which carries a command to the microprocessor to record a television program at a particular channel, date, time, and length. If a user is not present to program his or her VCR for recording, he or she may direct that a data unit be sent to his or her apparatus with a command to record a particular program or programs. The command could be complex recording sequence configured for serially broadcast television programs such as a miniseries which airs at different times on different nights of the week. This can be particularly useful when a user has forgotten to program a future recording, but has left his or her home. The user may direct the transfer of such a data unit using electronic mail to an ISP, or by telephone link to a location which will direct the actual transfer of a data unit.

Another potential on-screen icon is an icon representative of an Internet website address link 134. As described above in detail, the user may select this icon to obtain an Internet site address for locating and viewing additional information concerning a particular news show, sports event, or advertiser.

A third potential on-screen icon is an icon representative of a VCRPlus+ link 136 which may be provided, for example, in connection with an advertisement for another television program. When a user presses the appropriate keys on his or her remote control, the microprocessor stores the CDTL of that program, which is transmitted in the data unit, and records or displays the program at its time of airing.

A fourth potential on-screen icon is an icon representative of a Buy Link 138 which may be provided to send an order to the provider of goods or services vial the incorporated modem 77, or via the WebTV terminal 74. The microprocessor will be guided by the data in the data unit as to the address or other location to send the viewer's order.

As an alternative to the standard set of icons, which represent the type of option available to the user, the data unit may include particular descriptive icon which will be displayed on the screen. For example, the transmitted icon could consist of a digitized version of a manufacturer's logo.

If the particular embodiment is adapted for displaying standardized icons as set forth in FIG. 8, the digital data representative of the graphical icons could be stored in RAM or ROM at the viewer's location, with the data unit including a pointer to refer to the stored graphical icon. In this manner, the amount of data to be transmitted may be reduced. In addition, if specialized logos are desired to be used in addition to or in place of standardized icons, the digital data representative of these icons may be sent in bulk at a particular time (such as the late night when the television set is not likely to be used). Afterwards, the data unit need only include a pointer to the graphical icon, rather than the full set of digital data representative of the particular icon.

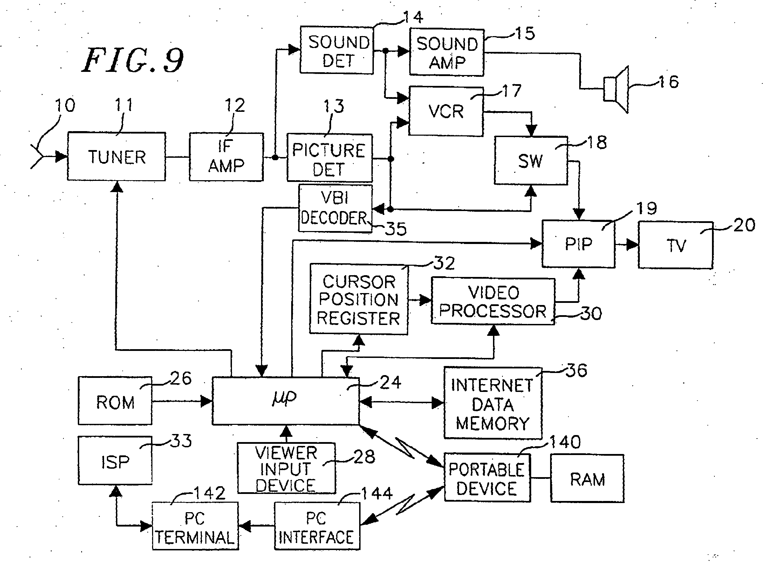

In yet another embodiment of the present invention, the microprocessor 24 incorporated into the television is equipped with an infrared transmitter suitable for transferring data to a portable device 142, as shown in FIG. 9. The system shown in FIG. 9 is substantially similar to the system shown in FIG. 1, with identical components having the same reference numbers. The transmitter incorporated into microprocessor 24 may also be provided in the form of a direct wire link, radio frequency transmitter, or some other means for providing digital data to the portable device. The microprocessor is adapted to transmit the received Internet site address and/or the descriptive title thereof to the portable device for storage therein. The portable device must therefore be adapted to receive the transmission as well as to store the transmission in RAM or some other storage means.

Once the Internet site address and/or descriptive title have been stored in the portable device, the user may thereafter transfer the stored Internet site address to a personal computer 142 suitable for connection to the Internet. The portable device 140 is therefore equipped with a transmitting apparatus, possibly infrared, radio frequency, or direct wire link for sending the digital data representative of the Internet site address to the personal computer. Once received by the personal computer via an interface 144, the user may connect to the Internet and obtain the additional information over the Internet.

The portable device may take the form of a portable computer, such as a Pilot or Newton, or may take the form of a portable Internet terminal, which itself is operable to connect to the Internet through an ISP, possibly by wireless two-way communications such as a cellular telephone connection. Alternatively, the portable computer could be removed from the system and the microprocessor 24 could be linked in direct communication with the user's personal computer 142, e.g., by IR emission of information and command signals to PC interface 144.

The described embodiments of the invention are only considered to be preferred and illustrative of the inventive concept; the scope of the invention is not to be restricted to such embodiment Various and numerous other arrangements may be devised by one skilled in the art without departing from the spirit and scope of this invention.

Some aspects of the invention are as follows:
An interactive entertainment network system comprising:
   a plurality of user interface units in individual homes, each user interface unit comprising a tuner, a modem and a display device;
   a television signal provider for supplying a plurality of television signals to the tuner of each user interface unit, at least one of the television signals comprising embedded data including a particular data address site, wherein at each user interface unit, the particular data address site is displayed simultaneously with the television program on the display device; and
   a data service provider in two-way connection with the modem of each user interface site for retrieving and transmitting data corresponding to a data address site requested by an individual user interface unit for display on the display device of that user.

The interactive entertainment network system above in which the data service provider is a networked computer system.

The interactive entertainment network system above in which the data service provider is an Internet service provider.

A display controller for coupling to a display device and to a data retrieval terminal in two-way communication with a data service provider, the display controller comprising:
a tuner for receiving a television signal containing a television program and at least one embedded data unit comprising a data address site;
means for extracting the at least one embedded data unit from the television signal;
a memory for storing the at least one data unit;
a video display generator;
a microcontroller coupled to the tuner and the extracting means and the memory
   (a) for storing the at least one data unit in the memory,
   (b) for controlling the video display generator to display information representative of the data site address on the display device simultaneously with the television program,
   (c) for selectively retrieving the data site address from the memory in response to a user request,
   (d) for controlling the data retrieval terminal to request data corresponding to the user selected data address site from the data service provider, and
   (e) for controlling the video display generator to format and display the requested data received from the data service provider on the display device.

The display controller above in which the extracting means is a vertical blanking interval (VBI) decoder.

The display controller above in which the video display generator comprises a picture-in-picture (PIP) generator, and wherein the microcontroller controls the video display generator to display the television program in a PIP window simultaneously with the information representative of the data site address on the display device.

The display controller above in which the video display generator comprises a PIP generator, and wherein the microcontroller controls the video display generator to display the television program in a PIP window simultaneously with the requested data on the display devices.

The display controlled above in which the video display generator further comprises means for formatting the requested data for display around the PIP window on the display device whereby none of the requested data is obscured by the PIP window.

The display controller above in which the video display generator comprises a graphics generator which generates a graphical icon representative of the data site address for display on the display device.

The display controller above in which the video display generator comprises a character generator which generates text representative of the data site address for display on the display device.

The display controller above in which the video display generator comprises a character generator which generates text representative of the data corresponding to the data site address for display on the display device.

The display controller above in which the microcontroller comprises means for switching between a television mode in which the television program is displayed without information representative of data site address and an information mode in which the television program and information representative of the data site address are displayed simultaneously.

The display controller above in which the display controller is incorporated into a cable box.

The display controller above in which the display controller is incorporated into a video cassette recorder (VCR).

A method for enhancing viewing of a television program with interactive information retrieval comprising the steps of:
at a television signal provider,
   (a) embedding at least one data unit comprising a data site address into a television signal containing a television program;
      at a user site,
   (b) receiving the television signal;
   (c) extracting the at least one data unit from the television signal;
   (d) displaying information representative of the data address site simultaneously with the television program on a display device;
   (e) storing the data address site in a memory;
   (f) selecting the information representative of the data address site;
   (g) establishing a connection with a data service provider having access to data corresponding to the selected data address site;
   (h) requesting the data corresponding to the data address site;
   (i) transmitting the data corresponding to the data address site from the data service provider to the user site; and
   (j) formatting and displaying the data corresponding to the data address site on the display device.

The method above in which step (E) comprises storing a plurality of data address sites in the memory.

The method above further comprising a step after step (E) of displaying a menu comprising at least two of the data address sites, and wherein step (F) comprises selecting a particular data address site from the menu.

The method above , in which the television program is displayed in a PIP window simultaneously with the information representative of the data address site.

The method above in which program information relating to the television program is displayed simultaneously with the television program and the information representative of the data site address.

The method above in which the data corresponding to the data address site is data available through the Internet.

The method above in which the data corrdsponding to the data address site is purchasing information.

The method above in which the data corresponding to the data address site comprises commands for controlling recording of a television program.

The method above in which the information representative of the data address site is a textual description of the data corresponding to the data address site.

The method above in which the information representative of the data address site is a graphical icon.

The method above in which the graphical icon is a symbol identifying the data corresponding to the data address site as an Internet data page.

The method above in which the graphical icon is a symbol identifying the data corresponding to the data address site as purchasing information.

The method above in which the graphical icon is a symbol identifying the data corresponding to the data address site as VCR programming information.

## Claims

1. A method for downloading information, the method comprising:
generating video of a television program for display in a first area of a display screen;
receiving a HyperText Markup Language (HTML) file that includes text and instructions for formatting the text for display on the display screen, wherein the text includes a user-selectable Internet site name;
reformatting the HTML file to display the text only in a remainder area of the display screen that does not include the first area;
generating the user-selectable Internet site name for display in the remainder area of the display screen, the Internet site name linked to an Internet site address and directed to a user's Internet account;
in response to receiving a user selection of the Internet site name while the video of the television program is displayed in the first area of the display screen, downloading information from the Internet site address for display; and
generating the downloaded information for display on the display screen simultaneously with the video of the television program in a picture-in-picture window, wherein the downloaded information is formatted for display only in said remainder area around the picture-in-picture window whereby none of the downloaded information is obscured by the picture-in-picture window.

2. The method of claim 1, wherein the user's Internet account is an e-mail account.

3. The method of claim 1, further comprising providing a second user-selectable Internet site name linked to a second Internet site address, the second user-selectable Internet site name related to the television program displayed in the first area of the display screen.

4. The method of claim 3, wherein the second user-selectable Internet site name corresponds to a second Internet site address for a fan Internet site.

5. The method of claim 1, further comprising providing a second user-selectable Internet site name corresponding to a second Internet site address, the second user-selectable Internet site name related to a broadcaster of the television program displayed in the first area of the display screen.

6. The method of claim 1, further comprising providing a second user-selectable Internet site name corresponding to a second Internet site address, the second user-selectable Internet site name related to a service provided by the user's Internet service provider.

7. The method of claim 1, further comprising providing a second user-selectable Internet site name corresponding to a second Internet site address, the second user-selectable Internet site name related to shopping.

8. A system for downloading information, the system comprising:
means for generating video of a television program for display in a first area of a display screen;
means for receiving a HyperText Markup Language (HTML) file that includes text and instructions for formatting the text for display on the display screen, wherein the text includes a user-selectable Internet site name;
means for reformatting the HTML file to display the text only in a remainder area of the display screen that does not include the first area;
means for generating the user-selectable Internet site name for display in a second area of the display screen, the Internet site name linked to an Internet site address and directed to a user's Internet account;
means for, in response to receiving a user selection of the Internet site name while the video of the television program is displayed in the first area of the display screen, downloading information from the Internet site address for display; and
means for generating the downloaded information for display on the display screen simultaneously with the video of the television program in a picture-in-picture window, wherein the downloaded information is formatted for display only in said remainder area around the picture-in-picture window whereby none of the downloaded information is obscured by the picture-in-picture window.

9. The system of claim 8, wherein the user's Internet account is an e-mail account.

10. The system of claim 8, the control unit further configured to cause the display of a second user-selectable Internet site name linked to a second Internet site address, the second user-selectable Internet site name related to the television program displayed in the first area of the display screen.

11. The system of claim 10, wherein the second user-selectable Internet site name corresponds to a second Internet site address for a fan Internet site.

12. The system of claim 8, the control unit further configured to cause the display of a second user-selectable Internet site name corresponding to a second Internet site address, the second user-selectable Internet site name related to a broadcaster of the television program displayed in the first area of the display screen.

13. The system of claim 8, the control unit further configured to cause the display of a second user-selectable Internet site name corresponding to a second Internet site address, the second user-selectable Internet site name related to a service provided by the user's Internet service provider.

14. The system of claim 8, the control unit further configured to cause the display of a second user-selectable Internet site name corresponding to a second Internet site address, the second user-selectable Internet site name related to shopping.

## Patentansprüche

1. Verfahren zum Herunterladen von Informationen, wobei das Verfahren folgendes umfasst:
Erzeugen von Video eines Fernsehprogramms zur Anzeige in einem ersten Bereich eines Anzeigebildschirms;
Empfangen einer Hypertext-Auszeichnungssprache (HTML) - Datei, die Text und Anweisungen zum Formatieren des Texts zur Anzeige auf dem Anzeigebildschirm beinhaltet, wobei der Text einen Benutzer-auswählbaren Internetseitennamen beinhaltet;
Neuformatieren der HTML-Datei, um den Text lediglich in einem verbleibenden Bereich des Anzeigebildschirms anzuzeigen, der den ersten Bereich nicht beinhaltet;
Erzeugen des Benutzer-wählbaren Internetseitennamens zur Anzeige im verbleibenden Bereich des Anzeigebildschirms, wobei der Internetseitenname mit einer Internetseitenadresse verbunden ist und auf das Internet-Account eines Benutzers verweist;
als Antwort auf das Empfangen einer Benutzerauswahl des Internetseitennamens, Herunterladen von Informationen von der Internetseitenadresse zur Anzeige, während das Video des Fernsehprogramms im ersten Bereich des Anzeigebildschirms angezeigt wird; und
Erzeugen der heruntergeladenen Informationen zur Anzeige auf dem Anzeigebildschirm gleichzeitig mit dem Video des Fernsehprogramms in einem Bild-in-Bild-Fenster, wobei die heruntergeladenen Informationen zur Anzeige lediglich in dem verbleibenden Bereich um das Bild-in-Bild-Fenster herum formatiert werden, wobei keine der heruntergeladenen Informationen durch das Bild-in-Bild-Fenster verdeckt werden.

2. Verfahren nach Anspruch 1, wobei das Internet-Account des Benutzers ein E-Mail-Account ist.

3. Verfahren nach Anspruch 1, weiterhin umfassend das Bereitstellen eines zweiten Benutzer-wählbaren Internetseitennamens, der mit einer zweiten Internetseitenadresse verbunden ist, wobei der zweite Benutzer-wählbare Internetseitenname einen Bezug zu dem im ersten Bereich des Anzeigebildschirms angezeigten Fernsehprogramm aufweist.

4. Verfahren nach Anspruch 3, wobei der zweite Benutzer-wählbare Internetseitenname einer zweiten Internetseitenadresse für eine Fan-Internetseite entspricht.

5. Verfahren nach Anspruch 1, weiterhin umfassend das Bereitstellen eines zweiten Benutzer-wählbaren Internetseitennamens, der einer zweiten Internetseitenadresse entspricht, wobei der zweite Benutzer-wählbare Internetseitenname einen Bezug zu einem Sender des im ersten Bereich des Anzeigebildschirms angezeigten Fernsehprogramms aufweist.

6. Verfahren nach Anspruch 1, weiterhin umfassend das Bereitstellen eines zweiten Benutzer-wählbaren Internetseitennamens, der einer zweiten Internetseitenadresse entspricht, wobei der zweite Benutzer-wählbare Internetseitenname einen Bezug zu einem durch den Internet-Service-Provider des Benutzers bereitgestellten Service aufweist.

7. Verfahren nach Anspruch 1, weiterhin umfassend das Bereitstellen eines zweiten Benutzer-wählbaren Internetseitennamens, der einer zweiten Internetseitenadresse entspricht, wobei der zweite Benutzer-wählbare Internetseitenname einen Bezug zum Einkaufen aufweist.

8. System zum Herunterladen von Informationen, wobei das System folgendes umfasst:
Mittel zum Erzeugen von Video eines Fernsehprogramms zur Anzeige in einem ersten Bereich eines Anzeigebildschirms;
Mittel zum Empfangen einer Hypertext-Auszeichnungssprache (HTML) -Datei, die Text und Anweisungen zum Formatieren des Texts zur Anzeige auf dem Anzeigebildschirm beinhaltet, wobei der Text einen Benutzer-wählbaren Internetseitennamen umfasst;
Mittel zum Neuformatieren der HTML-Datei, um den Text lediglich auf einem verbleibenden Bereich des Anzeigebildschirms anzuzeigen, der den ersten Bereich nicht beinhaltet;
Mittel zum Erzeugen des Benutzer-wählbaren Internetseitennamens zur Anzeige auf einem zweiten Bereich des Anzeigebildschirms, wobei der Internetseitenname mit einer Internetseitenadresse verbunden ist und auf das Internet-Account eines Benutzers verweist;
Mittel zum Herunterladen von Informationen von der Internetseitenadresse zur Anzeige als Antwort auf das Empfangen einer Benutzerauswahl des Internetseitennamens, während das Video des Fernsehprogramms im ersten Bereich des Anzeigebildschirms angezeigt wird; und
Mittel zum Erzeugen von heruntergeladenen Informationen zur Anzeige auf dem Anzeigebildschirm gleichzeitig mit dem Video des Fernsehprogramms in einem Bild-in-Bild-Fenster, wobei die heruntergeladenen Informationen zur Anzeige lediglich in dem verbleibenden Bereich um das Bild-in-Bild-Fenster herum formatiert werden,
wobei keine der heruntergeladenen Informationen durch das Bildin-Bild-Fenster verdeckt werden.

9. System nach Anspruch 8, wobei das Internet-Account des Benutzers ein E-Mail-Account ist.

10. System nach Anspruch 8, wobei die Steuereinheit weiterhin konfiguriert ist, um die Anzeige eines zweiten Benutzer-wählbaren Internetseitennamens zu veranlassen, der mit einer zweiten Internetseitenadresse verbunden ist, wobei der zweite Benutzer-wählbare Internetseitenname einen Bezug zu dem im ersten Bereich des Anzeigebildschirms angezeigten Fernsehprogramm aufweist.

11. System nach Anspruch 10, wobei der zweite Benutzer-wählbare Internetseitenname einen Bezug zu einer zweiten Internetseitenadresse für eine Fan-Internetseite aufweist.

12. System nach Anspruch 8, wobei die Steuereinheit weiterhin konfiguriert ist, um die Anzeige eines zweiten Benutzer-wählbaren Internetseitennamens zu veranlassen, der einer zweiten Internetseitenadresse entspricht, wobei der zweite Benutzer-wählbare Internetseitenname einen Bezug zu einem im ersten Bereich des Anzeigebildschirms angezeigten Sender aufweist.

13. System nach Anspruch 8, wobei die Steuereinheit weiterhin konfiguriert ist, um die Anzeige eines zweiten Benutzer-wählbaren Internetseitennamens zu veranlassen, der einer zweiten Internetseitenadresse entspricht, wobei der zweite Benutzer-wählbare Internetseitenname einen Bezug zu einem durch den Internet-Service-Provider des Benutzers bereitgestellten Service aufweist.

14. System nach Anspruch 8, wobei die Steuereinheit weiterhin konfiguriert ist, um die Anzeige eines zweiten Benutzer-wählbaren Internetseitennamens zu veranlassen, der einer zweiten Internetseitenadresse entspricht, wobei der zweite Benutzer-wählbare Internetseitenname einen Bezug zum Einkaufen aufweist.

## Revendications

1. Procédé pour télécharger des informations, le procédé comprenant :
la génération de la vidéo d'un programme télévisé pour affichage dans une première zone d'un écran d'affichage ;
la réception d'un fichier en langage hypertexte (HTML) qui inclut du texte et des instructions pour formater le texte à afficher sur l'écran d'affichage, dans lequel le texte comporte un nom de site Internet sélectionnable par l'utilisateur ;
le reformatage du fichier HTML pour afficher le texte uniquement dans la zone restante de l'écran d'affichage qui ne comprend pas la première zone ;
la génération du nom du site Internet sélectionnable par l'utilisateur pour affichage dans le reste de la zone de l'écran, du nom du site Internet associé à une adresse de site internet et dirigé vers un compte internet d'utilisateur ;
en réponse à la réception d'un choix d'utilisateur du nom du site Internet pendant l'affichage de la vidéo du programme télévisé dans la première zone de l'écran d'affichage, téléchargement des informations depuis l'adresse du site Internet pour affichage ; et
la génération des informations téléchargées pour affichage sur l'écran d'affichage simultanément avec la vidéo du programme télévisé dans une fenêtre image dans l'image, dans laquelle les informations téléchargées sont formatées pour affichage uniquement dans ladite zone restante autour de la fenêtre image dans l'image dans laquelle aucune des informations téléchargées n'est obscurcie par la fenêtre image dans l'image.

2. Procédé selon la revendication 1, dans lequel le
compte Internet de l'utilisateur est un compte de messagerie électronique.

3. Procédé selon la revendication 1, comprenant en
outre la fourniture d'un deuxième nom de site Internet sélectionnable par l'utilisateur associé à une deuxième adresse de site Internet, le deuxième nom de site Internet sélectionnable par l'utilisateur étant associé à un programme télévisé affiché dans la première zone de l'écran d'affichage.

4. Procédé selon la revendication 3, dans lequel le
deuxième nom de site Internet sélectionnable par l'utilisateur correspond à une deuxième adresse de site Internet pour un site Internet de supporters.

5. Procédé selon la revendication 1, comprenant en
outre la fourniture d'un deuxième nom de site Internet sélectionnable par l'utilisateur correspondant à une deuxième adresse de site Internet, le deuxième nom de site Internet sélectionnable par l'utilisateur étant associé à un télédiffuseur de programme télévisé affiché dans la première zone de l'écran d'affichage.

6. Procédé selon la revendication 1, comprenant en
outre la fourniture d'un deuxième nom de site Internet sélectionnable par l'utilisateur correspondant à une deuxième adresse de site Internet, le deuxième nom de site Internet sélectionnable par l'utilisateur étant associé à un service fourni par le fournisseur de service Internet de l'utilisateur.

7. Procédé selon la revendication 1, comprenant en
outre la fourniture d'un deuxième nom de site Internet sélectionnable par l'utilisateur correspondant à une deuxième adresse de site Internet, le deuxième nom de site Internet sélectionnable par l'utilisateur étant associé à du shopping.

8. Système pour télécharger des informations, le système comprenant :
des moyens pour générer la vidéo d'un programme télévisé pour affichage dans une première zone d'un écran d'affichage ;
des moyens pour recevoir un fichier en langage hypertexte (HTML) qui inclut du texte et des instructions pour formater le texte à afficher sur l'écran, dans lequel le texte comporte un nom de site internet sélectionnable par l'utilisateur ;
des moyens pour reformater le fichier HTML pour afficher le texte uniquement dans la zone restante de l'écran d'affichage qui ne comprend pas la première zone ;
des moyens pour générer le nom du site Internet sélectionnable par l'utilisateur pour affichage dans une deuxième zone de l'écran d'affichage, du nom du site Internet associé à une adresse de site Internet et dirigé vers un compte Internet d'utilisateur ;
des moyens pour, en réponse à la réception d'un choix d'utilisateur du nom de site Internet pendant l'affichage de la vidéo du programme de télévision dans la première zone de l'écran, télécharger des informations depuis l'adresse du site Internet pour affichage ; et
des moyens pour générer les informations téléchargées pour affichage sur l'écran d'affichage simultanément avec la vidéo du programme télévisé dans une fenêtre image dans l'image, dans laquelle les informations téléchargées sont formatées pour affichage uniquement dans ladite zone restante autour de la fenêtre image dans l'image dans laquelle aucune des informations téléchargées n'est obscurcie par la fenêtre image dans l'image.

9. Système selon la revendication 8, dans lequel le
compte Internet de l'utilisateur est un compte de messagerie électronique.

10. Système selon la revendication 8, l'unité de commande étant en outre configurée pour afficher un deuxième nom de site Internet sélectionnable par l'utilisateur associé à une deuxième adresse de site Internet, le deuxième nom de site Internet sélectionnable par l'utilisateur étant associé à un programme télévisé affiché dans la première zone de l'écran d'affichage.

11. Système selon la revendication 10, dans lequel le deuxième nom de site Internet sélectionnable par l'utilisateur correspond à une deuxième adresse de site Internet pour un site Internet de supporters.

12. Système selon la revendication 8, l'unité de commande étant en outre configurée pour afficher un deuxième nom de site Internet sélectionnable par l'utilisateur correspondant à une deuxième adresse de site Internet, le deuxième nom de site Internet sélectionnable par l'utilisateur étant associé à un télédiffuseur de programme télévisé affiché dans la première zone de l'écran d'affichage.

13. Système selon la revendication 8, l'unité de commande étant en outre configurée pour afficher un deuxième nom de site Internet sélectionnable par l'utilisateur correspondant à une deuxième adresse de site Internet, le deuxième nom de site Internet sélectionnable par l'utilisateur étant associé à un service fourni par le fournisseur de site Internet de l'utilisateur.

14. Système selon la revendication 8, l'unité de commande étant en outre configurée pour afficher un deuxième nom de site Internet sélectionnable par l'utilisateur correspondant à une deuxième adresse de site Internet, le deuxième nom de site Internet sélectionnable par l'utilisateur étant associé à du shopping.
